# EUROPEAN PATENT SPECIFICATION

(11) **EP 4 374 750 B1**
(45) Date of publication and mention of the grant of the patent: **05.11.2025**
(21) Application number: 23211567.5
(22) Date of filing: 22.11.2023
(51) Int. Cl.: A47J 31/42, A47J 42/50

(54) **REMOVABLE BEAN HOPPER ASSEMBLY**
ABNEHMBARER BOHNENVORRATSBEHÄLTER
ENSEMBLE TRÉMIE À GRAINS AMOVIBLE

(30) Priority: 22.11.2022 US 202218057839
(43) Date of publication of application: 29.05.2024
(60) Divisional application: 25186339.5
(73) Proprietor: Whirlpool Corporation, Benton Harbor, MI 49022 (US)
(72) Inventor: Müller, Martin Andreas, 9014 St. Gallen (CH); Riessbeck, Wolfgang, 8597 Landschlacht (CH); Bressanin Weber, Fabiana Nunes, Benton Harbor, 49022 (US); Yesil, Saadettin, 78476 Allensbach (DE)
(74) Representative: PGA S.p.A., Milano, Succursale di Lugano

(56) References cited:
- US-A1- 2009 031 900
- US-A1- 2016 051 082
- US-B2- 10 130 215
- US-B2- 8 051 765

## Description

### BACKGROUND OF THE DISCLOSURE

The present disclosure generally relates to bean hopper assembly, and, more specifically, to a bean hopper assembly that is removable from a brewing assembly.

US2009/0031900A1 discloses a bean hopper assembly comprising a housing; a tub at least partially located in the housing defining a pocket configured to hold beans, an opening extending through the tub and configured for routing beans, in particular for routing beans into a grinder; a knob extending through the opening and including a first member configured to be toggled between a first position and a second position; and a push button assembly including a locking member configured to be selectively moved to an actuated position when the first member is in the second position to release the tub.

### SUMMARY OF THE DISCLOSURE

The present invention refers to a bean hopper assembly according to claim 1.

*According to a dependent aspect of the present disclosure,* the *bean hopper assembly includes* the *housing that includes a cantilever and* the *tub that is at least partially located in the housing over the cantilever.* In particular, the tub is configured *to route beans into a provided grinder.* The *knob is rotationally fixed to* the *first locking member that includes an annular rim that defines a flange. The flange extends circumferentially outwardly from the annular rim and is radially and circumferentially aligned with the cantilever in a locked position, and the flange is circumferentially spaced from the cantilever in an unlocked position.* The *second locking member is selectively moveable to an actuated position when the flange is in the unlocked position to release the tub.* Optionally, the *tub is fixed to the housing when the push button assembly is in the actuated position and the flange is in the locked position.*

### BRIEF DESCRIPTION OF THE DRAWINGS

In the drawings:
FIG. 1 is a front perspective view of a brewing assembly according to an aspect of the present disclosure;
FIG. 2 is a top perspective view of a bean hopper assembly removed from the brewing assembly according to an aspect of the present disclosure;
FIG. 3 is a top perspective view of components of the bean hopper assembly removed from a tub and a housing according to an aspect of the present disclosure;
Fig. 4 is a cross-sectional side view from a first side of the bean hopper assembly according to an aspect of the present disclosure;
Fig. 5 is a cross-sectional side view from a second side of the bean hopper assembly according to an aspect of the present disclosure;
FIG. 6 is a bottom view of the bean hopper assembly according to an aspect of the present disclosure;
FIG. 7 is a top perspective view of a knob and a first locking member isolated from other components of the bean hopper assembly according to an aspect of the present disclosure;
FIG. 8 is a cross-sectional side view of the knob and the first locking member integrated with the other components of the bean hopper assembly according to an aspect of the present disclosure;
FIG. 9 is a top view of the tub isolated from other components of the bean hopper assembly according to an aspect of the present disclosure;
FIG. 10 is a sequence of bottom view of the bean hopper assembly illustrating an annular valve moved between an open position and a closed position according to an aspect of the present disclosure; and
FIG. 11 is an interior side view of the bean hopper assembly illustrating a second locking member moved between a rested position and an actuated position according to an aspect of the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a bean hopper assembly that is removable from a grinder. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

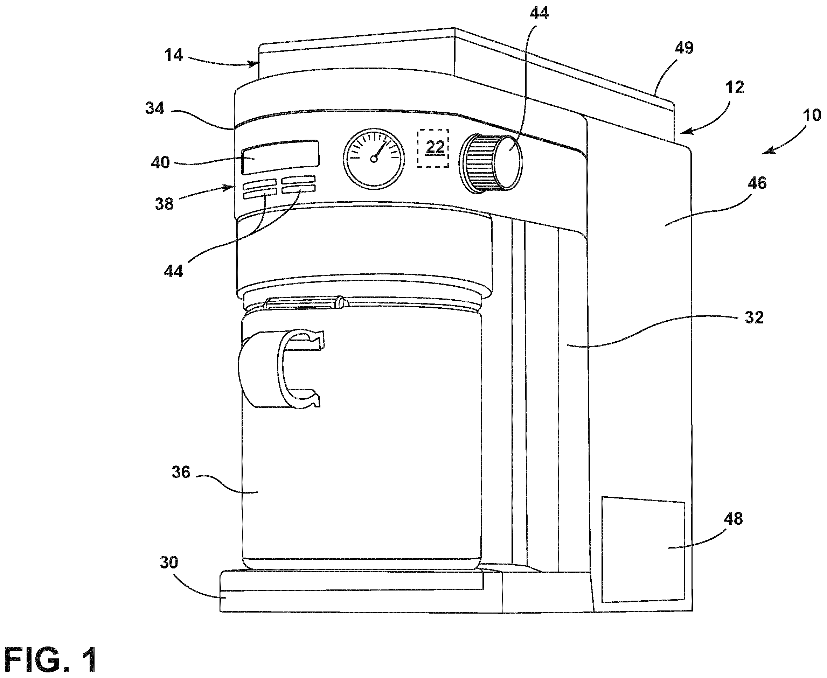

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

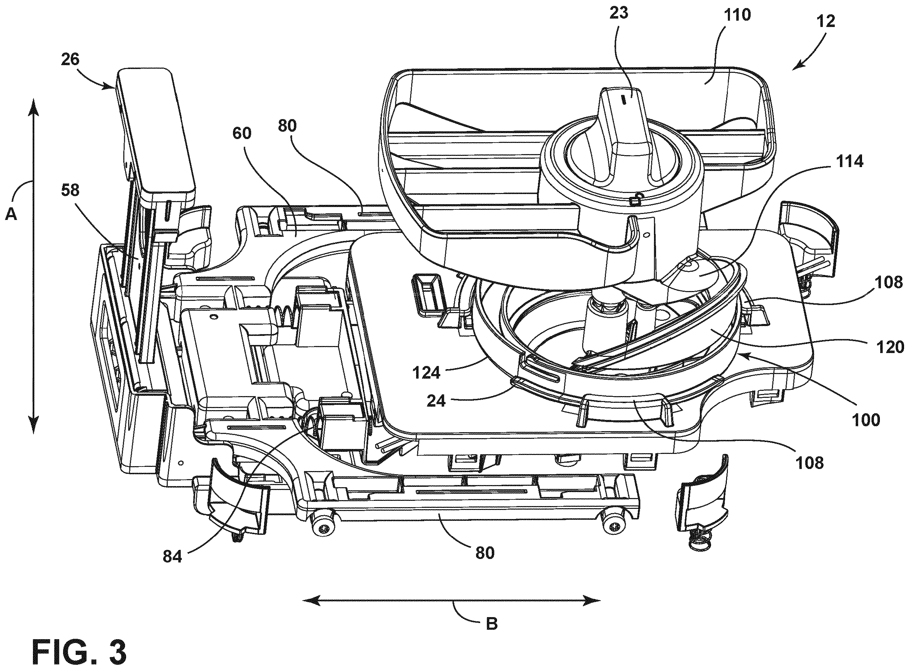

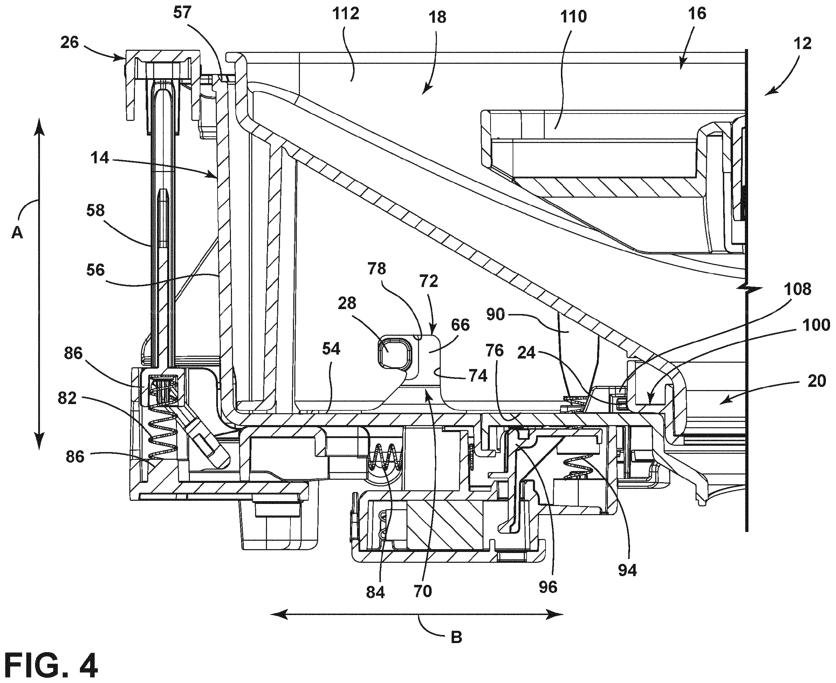

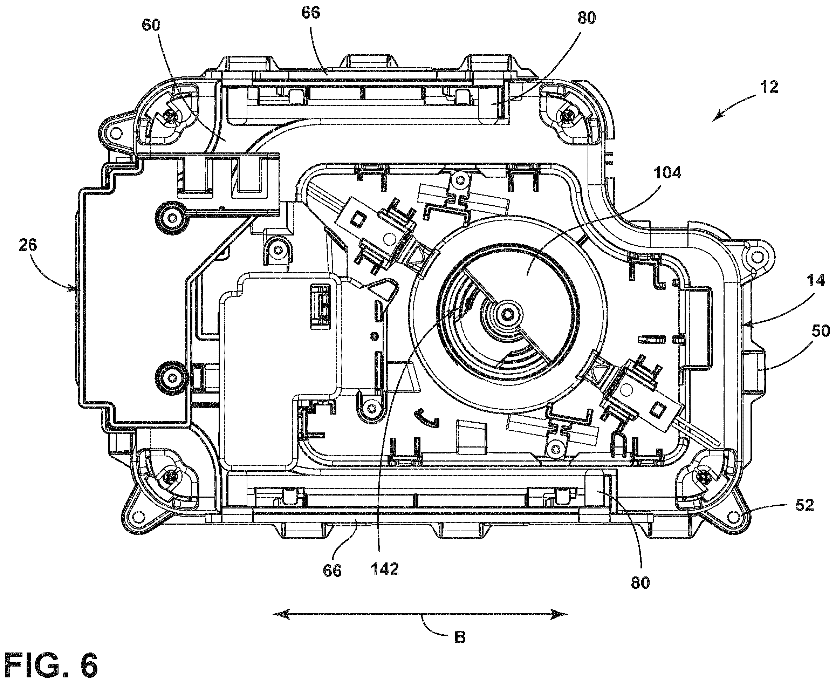

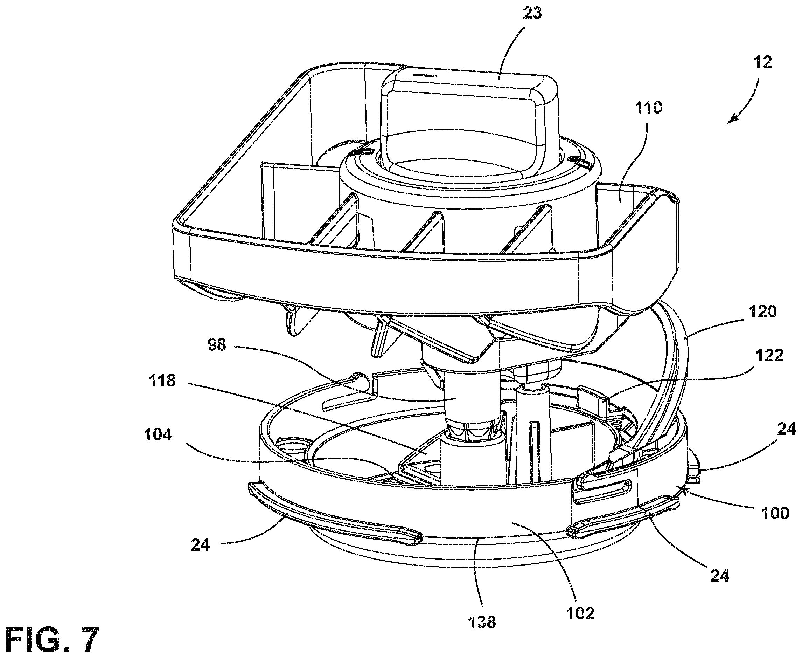

Referring to FIGS. 1-11, reference numeral 10 generally designates a brewing assembly (e.g., a coffee maker, an espresso maker, and/or the like). The brewing assembly 10 includes a bean hopper assembly 12 that includes a housing 14 and a tub 16 at least partially located in the housing 14. The tub 16 defines a pocket 18 that is configured to hold beans used to brew beverages with the brewing assembly 10. An opening 20 extends through the tub 16 for routing beans into a grinder 22 (FIGS. 1, 4, and 9). A knob 23 extends through the opening 20 and includes a first locking member 24 (FIG. 7). The first locking member 24 includes a locked position where the tub 16 is fixed to the housing 14, and an unlocked position where the tub 16 is selectively fixed to the housing 14. A push button assembly 26 includes a second locking member 28 that is selectively moveable to an actuated position when the first locking member 24 is in the unlocked position to release the tub 16, and where the tub 16 is fixed to the housing 14 when the second locking member 28 is in the actuated position and the first locking member 24 is in the locked position (FIGS. 3 and 4).

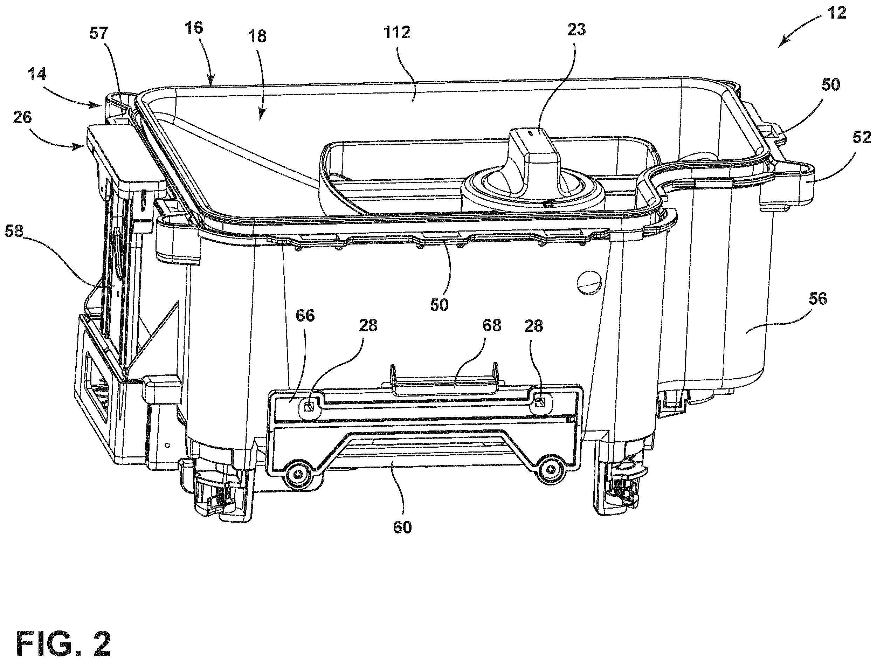

With reference now to FIGS. 1 and 2, the brewing assembly 10 may include a support base 30 and a pedestal portion 32 extending from the support base 30. The grinder 22 may be located within a grinder housing 34 extending from the pedestal portion 32 that is opposite the support base 30. The brewing assembly 10 may include a beverage container 36 located under the grinder housing 34. The brewing assembly 10 may further include a user interface 38 that may include a display screen 40, a pressure gauge 42, and a plurality of buttons and/or dials 44 for operating the brewing assembly 10. A liquid reservoir 46 and a used bean bin 48 may be located in the support base 30, the pedestal portion 32, or the grinder housing 34. In use, the grinder 22 selectively receives beans from the bean hopper assembly 12 for grinding where ground beans can be further processed for brewing via a heated liquid (which may be pressurized) from the liquid reservoir 46. The brewed liquid is then routed to the beverage container 36 and the used and ground coffee beans are routed to the used bean bin 48. A cover 49 may be located over the tub 16 to retain the beans within the pocket 18.

With reference now to FIGS. 2-4, the housing 14 may be connected to the grinder housing 34 with a series of connection tabs 50 and fastener apertures 52. In this manner, the housing 14 may be configured to be permanently connected to the grinder housing 34 (i.e., not removable without tools). The housing 14 includes a floor 54 and a sidewall 56 that extends from the floor 54 to a rim 57 to define a space for locating the tub 16. The push button assembly 26 includes a first moveable bracket 58 that extends along a first axis "A" and a second moveable bracket 60 that extends along a second axis "B." The second moveable bracket 60 is pivotally connected to the first moveable bracket 58 by a linkage 62 (FIG. 4) that is configured to translate movement of the first moveable bracket 58 along the first axis A into movement of the second moveable bracket 60 along the second axis B. The second locking member 28 is coupled to the second moveable bracket 60 and is configured as at least one protrusion that is selectively moveable to the actuated position when the first locking member 24 is in the unlocked position to release the tub 16. However, the tub 16 remains fixed to the housing 14 when the second locking member 28 is in the actuated position and the first locking member 24 is in the locked position. More particularly, the second locking member 28 may be located on a plate 66 connected to the second moveable bracket 60. The sidewall 56 of the housing 14 defines a track tab 68 (FIG. 2) that retains the plate 66 in close proximity to an exterior of the housing 14.

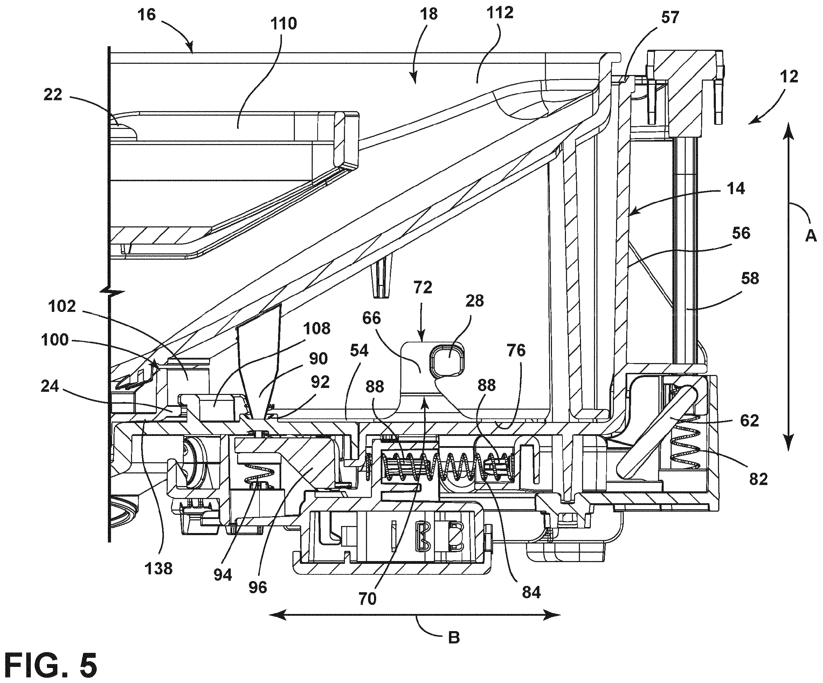

With reference now to FIG. 4, the housing 14 defines a slot 70 elongated along the second axis B. The tub 16 defines a channel 72 that includes a first portion 74 that extends from a bottom tub surface 76 along the first axis A and a second portion 78 that is opposite the bottom tub surface 76 that extends along the second axis B. The second locking member 28 (e.g., the protrusion) is retained in the second portion 78 of the channel 72 and is moveable into alignment with the first portion 74 of the channel 72 when the push button assembly 26 is in the actuated position. The second portion 78 may be angled towards the bottom tub surface 76 to facilitate insertion and removal of the second locking member 28. With reference now to FIG. 5, the second moveable bracket 60 may be generally U-shaped and include a pair of prongs 80. The plate 66 may include a pair of plates 66 with each plate 66 connected to separate prongs 80. The second locking member 28 may include a plurality of protrusions with one or more protrusions on each plate 66. In some embodiments, each plate 66 includes at least two protrusions and each protrusion may be located in a distinct slot 70 and channel 72.

With reference to FIGS. 4 and 5, the linkage 62 extends between and is pivotally connected to the first moveable bracket 58 and is pivotally connected to the second moveable bracket 60. A first spring element 82 (e.g., at least one helical spring) biases the first moveable bracket 58 away from the actuated position and a second spring element 84 (e.g., at least one helical spring) biases the second moveable bracket 60 away from the actuated position. More particularly, the first moveable bracket 58 and the housing 14 each define cooperating first element pockets 86 and ends of the first spring element 82 are located in the cooperating first element pockets 86 to bias the first moveable bracket 58 upwardly along the first axis A. The second moveable bracket 60 and the housing 14 each define cooperating second element posts 88 (FIG. 5), and ends of the second spring element 84 are located over the cooperating second element posts 88 to bias the second moveable bracket 60 along the second axis B towards the first moveable bracket 58. The tub 16 defines a post 90, and the housing 14 defines an aperture 92 (FIG. 5). The post 90 is located in the aperture 92 and biased away from the aperture 92 by a third spring element 94 (e.g., at least one helical spring) to push the tub 16 away from the housing 14 when the knob 23 is in the unlocked position and the push button assembly 26 is in the actuated position. More particularly, a pawl 96 may be pivotally connected to the housing 14 and the third spring element 94 may bias the pawl 96 into contact with the post 90.

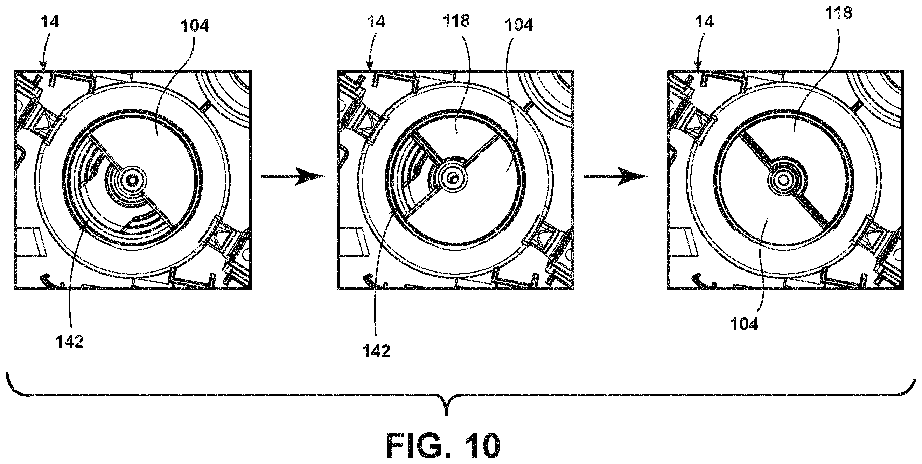

With reference now to FIGS. 2, 3, 7, and 8, the knob 23 includes a stem 98 (FIG. 7) extending through the opening 20 to an annular valve 100 that is rotatably fixed with the knob 23. The annular valve 100 includes an annular rim 102 and a door 104 located within the annular rim 102. The door 104 is rotatable with respect to the opening 20 between a closed position where the opening 20 is obstructed by the door 104, and an open position (FIG. 10) where the opening 20 is unobstructed by the door 104. The annular rim 102 may be coupled with the first locking member 24, and the first locking member 24 may be configured as at least one flange. The housing 14 includes at least one cantilever 108 that is radially and circumferentially aligned with the first locking member 24 to axially retain the annular valve 100 in the locked position. The at least one cantilever 108 is circumferentially spaced from the first locking member 24 in the unlocked position. In some embodiments, the open position of the door 104 corresponds to the locked position of the first locking member 24 and the closed position of the door 104 corresponds to the unlocked position of the first locking member 24. In some embodiments, the first locking member 24 includes a plurality of flanges (e.g., three) circumferentially spaced around the annular rim 102, and the at least one cantilever 108 includes a plurality of cantilevers 108 (e.g., three) circumferentially spaced equally to the plurality of flanges.

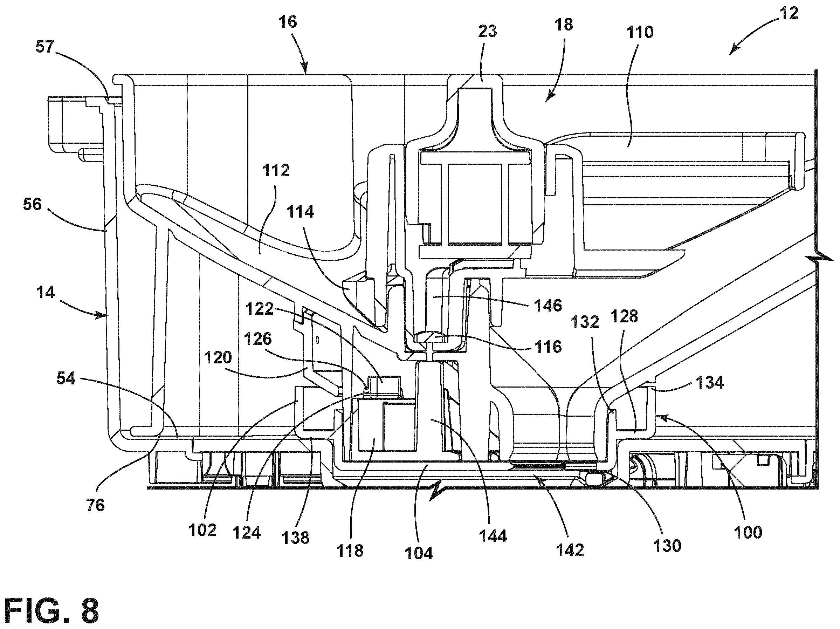

With reference now to FIGS. 2, 3, and 7-9, the knob 23 may be connected to a sift element 110 that is at least partially located in the pocket 18 of the tub 16. More particularly, the sift element 110 may include a grate-type shape that is spaced from the opening 20. The pocket 18 may be defined by an internal tub surface 112 that is generally funnel-shaped for routing beans into the opening 20. The sift element 110 includes a guide 114 (FIG. 3) that defines a contour that closely matches the shape of the internal tub surface 112. The sift element 110 further includes a rod 116 that extends through the tub 16 to a stationary door element 118. The knob 23 rotates relative to the sift element 110 such that rotation of the knob 23 does not move the stationary door element 118. A bow cam element 120 is fixedly coupled to the tub 16 with a connection bracket 122. The connection bracket 122 includes a central bend 124 (e.g., about 90°) and the tub 16 includes a bracket retaining slit 126 that connects to the connection bracket 122 (FIG. 8).

With reference now to FIG. 8, the annular valve 100 includes a top surface 128 and a bottom surface 130. The top surface 128 of the annular rim 102 includes an inner annular cam surface 132 and an outer annular cam surface 134. The inner annular cam surface 132 is located radially inwardly from the outer annular cam surface 134 and extends upwardly towards the knob 23 at a smaller distance than the outer annular cam surface 134. In this manner, the inner annular cam surface 132 and the outer annular cam surface 134 may contact the bottom tub surface 76 (e.g., a funnel-shaped portion of the bottom tub surface 76). The bottom tub surface 76 may be funnel-shaped and asymmetric such that the bow cam element 120 may contact and/or otherwise support one or both of the inner annular cam surface 132 and the outer annular cam surface 134. The bottom surface 130 of the annular rim 102 may include an inwardly stepped surface 138, and the floor 54 of the housing 14 may define a bean channel 142 that routes beans through the housing 14 to the grinder 22. The stationary door element 118 may include a first anchor projection 144 that is fastened to a second anchor projection 146 of the sift element 110 with the rod 116.

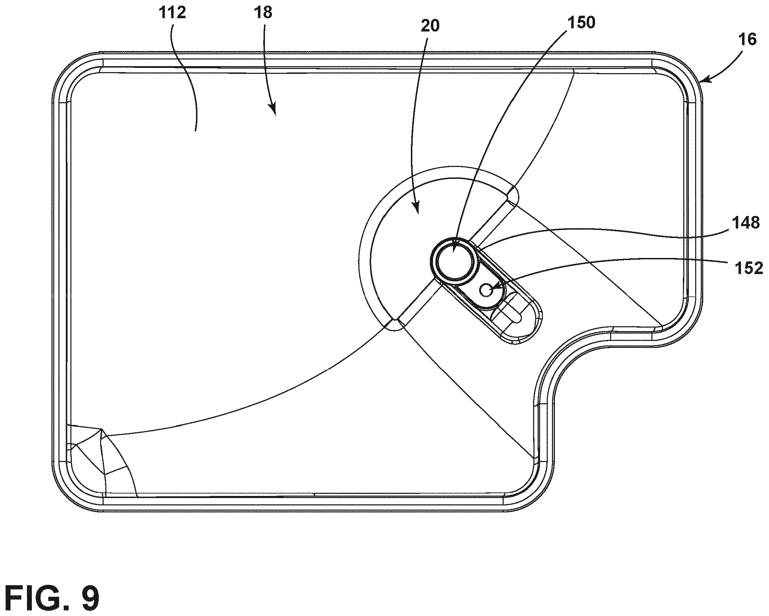

With reference to FIG. 9, the tub 16 includes an anchor base 148 that extends upwardly from the internal tub surface 112. The anchor base 148 includes a stem hole 150 for accommodating the stem 98 of the knob 23 and an anchor hole 152 for accommodating connection of the first anchor projection 144 and the second anchor projection 146. In this manner, the knob 23 rotates relative to the stem hole 150 such that rotation of the knob 23 does not move the stationary door element 118 and the sift element 110 that are connected through the anchor hole 152.

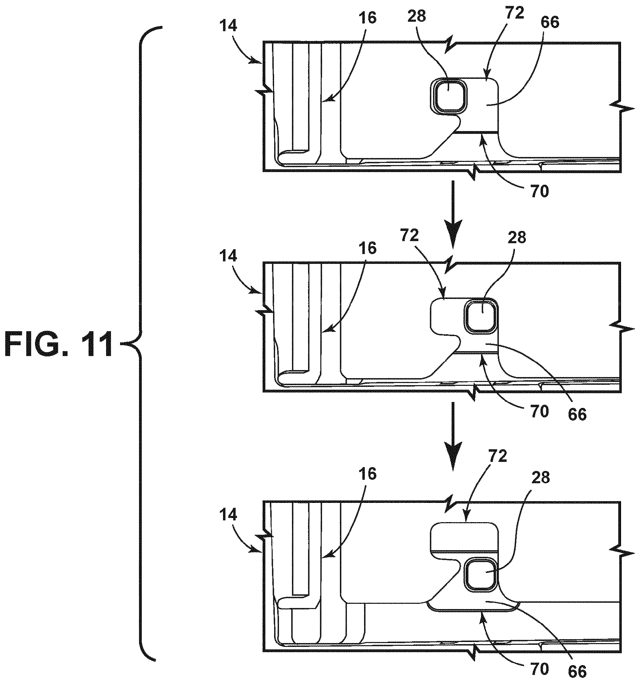

With reference to FIG. 10, the first locking member 24 is in the locked position and the door 104 is in an open position (left image in sequence). As the knob 23 is rotated, the first locking member 24 and the door 104 are contemporaneously rotated to an intermediary position (center image in sequence) and then to the unlocked and closed positions (right image in sequence). With reference now to FIG. 11, when the first locking member 24 is in the unlocked position and the door is in the closed position, the push button assembly 26 can be moved to the actuated position to release the second locking member 28. More particularly, the second locking member 28 initially resides within the second portion 78 of the channel 72 (top image in sequence) and, as the push button assembly 26 is moved to the actuated position, the second locking member 28 moves into alignment with the first portion 74 of the channel 72 (center image in sequence). When the second locking member 28 is located in alignment with the first portion 74 and the first locking member 24 is in the unlocked position, the tub 16 can be removed from the housing 14 (bottom image in sequence).

According to another aspect of the present disclosure, a bean hopper assembly is provided. The bean hopper assembly comprises a housing and a tub at least partially located in the housing. The tub defines a pocket configured to hold beans and an opening extends through the tub to route beans into a provided grinder. A knob extends through the opening and includes a first locking member that is in a locked position where the tub is fixed to the housing, and an unlocked position where the tub is selectively fixed to the housing. A push button assembly includes a second locking member that is selectively moveable to an actuated position when the first locking member is in the unlocked position to release the tub, and where the tub is fixed to the housing when the second locking member is in the actuated position and the first locking member is in the locked position.

According to another aspect, a knob is rotationally fixed to a door and the door is rotatable with respect to an opening between a closed position where the opening is obstructed by the door, and an open position where the opening is unobstructed by the door.

According to another aspect, a door is located within an annular rim and the annular rim includes a first locking member.

According to another aspect, a knob is rotatable to move a first locking member to an unlocked position where a door is located in a closed position, and the knob is rotatable to move the first locking member to a locked position where the door is located in the open position.

According to another aspect, a first locking member includes at least one flange extending from an annular rim and a housing includes at least one cantilever that is radially and circumferentially aligned with the at least one flange to axially retain the annular rim in a locked position and is circumferentially spaced from the flange in an unlocked position.

According to another aspect, at least one flange includes a plurality of flanges circumferentially spaced around an annular rim and at least one cantilever includes a plurality of cantilevers circumferentially spaced equally to the plurality of flanges.

According to another aspect, a push button assembly includes a first moveable bracket and a second moveable bracket pivotally connected to the first moveable bracket by a linkage.

According to another aspect, a first moveable bracket extends along a first axis and a second moveable bracket extends along a second axis that is transverse to the first axis.

According to another aspect, a linkage is configured to translate movement of a first moveable bracket along a first axis into movement of a second moveable bracket along a second axis.

According to another aspect, a second moveable bracket extends along an exterior of a housing.

According to another aspect, a housing defines a slot elongated along a second axis and a tub defines that a channel includes a first portion extending from a bottom tub surface along a first axis and a second portion that is opposite the bottom tub surface that extends along the second axis.

According to another aspect, a second moveable bracket defines a second locking member that includes a protrusion retained in a second portion of a channel and is moveable into alignment with a first portion of the channel when a button assembly is in an actuated position.

According to another aspect, a first spring element biases a first moveable bracket away from an actuated position and a second spring element biases a second moveable bracket away from an actuated position.

According to another aspect, a tub defines a post and a housing defines an aperture. The post is located in the aperture and biased away from the aperture by a third spring element to push the tub away from the housing when a knob is in an unlocked position and a push button assembly is in the actuated position.

According to yet another aspect of the present disclosure, a bean hopper assembly includes a housing that has a cantilever and a tub that is at least partially located in the housing over the cantilever. The tub defines a pocket configured to hold beans and an opening extends through the tub to route beans into a provided grinder. A knob extends through the opening and is rotationally fixed to a first locking member that includes an annular rim that defines a flange. The flange extends circumferentially outwardly from the annular rim and is radially and circumferentially aligned with the cantilever in a locked position, and the flange is circumferentially spaced from the cantilever in an unlocked position. A push button assembly includes a second locking member that is selectively moveable to an actuated position when the flange is in the unlocked position to release the tub. The tub is fixed to the housing when the push button assembly is in the actuated position and the flange is in the locked position.

According to another aspect, a push button assembly includes a first moveable bracket that extends along a first axis and a second moveable bracket that extends along a second axis that is pivotally connected to the first moveable bracket by a linkage. The linkage is configured to translate movement of the first moveable bracket along the first axis into movement of the second moveable bracket along the second axis.

According to another aspect, a housing defines a slot elongated along a second axis and a tub defines a channel that includes a first portion that extends from a bottom tub surface along a first axis and a second portion that is opposite the bottom tub surface that extends along the second axis.

According to another aspect, a second moveable bracket defines a second locking member that includes a protrusion retained in a second portion of a channel and is moveable into alignment with a first portion of the channel when a button assembly is in an actuated position.

According to yet another aspect of the present disclosure, a bean hopper comprises a housing and a tub at least partially located in the housing. The tub defines a pocket configured to hold beans and an opening extends through the tub to route beans into a provided grinder. A knob extends through the opening and includes a first locking member that includes a locked position where the tub is fixed to the housing, and an unlocked position where the tub is selectively fixed to the housing. A push button assembly includes a first moveable bracket that extends along a first axis and a second moveable bracket that extends along a second axis that is pivotally connected to the first moveable bracket by a linkage. The linkage is configured to translate movement of the first moveable bracket along the first axis into movement of the second moveable bracket along the second axis. A second locking member is coupled to the second moveable bracket and defines at least one protrusion that is selectively moveable to an actuated position when the first locking member is in the unlocked position to release the tub. The tub is fixed to the housing when the at least one protrusion is in the actuated position and the first locking member is in the locked position.

According to another aspect, a housing defines a slot elongated along a second axis and a tub defines a channel that includes a first portion that extends from a bottom tub surface along a first axis and a second portion that is opposite the bottom tub surface that extends along the second axis. At least one protrusion is retained in the second portion of the channel and is moveable into alignment with the first portion of the channel when a button assembly is in an actuated position.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without departing from the invention as defined by the appended claims. For example, elements shown as integrally formed may be constructed of multiple parts or elements shown as multiple parts may be integrally formed, the operation of the interfaces may be reversed or otherwise varied, the length or width of the structures and/or members or connectors or other elements of the system may be varied, and the nature or number of adjustment positions provided between the elements may be varied without departing from the scope of the present invention as defined by the appended claims. It should be noted that the elements and/or assemblies of the system may be constructed from any of a wide variety of materials that provide sufficient strength or durability, in any of a wide variety of colors, textures, and combinations, without departing from the scope of the present invention as defined by the appended claims.

## Claims

1. A bean hopper assembly (12) comprising:
a housing (14);
a tub (16) at least partially located in the housing (14) defining a pocket (18) configured to hold beans, an opening (20) extending through the tub (16) and configured for routing beans, in particular for routing beans into a grinder (22);
a knob (23) extending through the opening (20) and including a first locking member (24) configured to be toggled between a locked position where the tub (16) is fixed to the housing (14) and an unlocked position where the tub (16) is selectively fixed to the housing (14); and
a push button assembly (26) including a second locking member (28) configured to be selectively moved to an actuated position when the first locking member (24) is in the unlocked position to release the tub (16).

2. The bean hopper assembly (12) of claim **1,** wherein the tub (16) is fixed to the housing (14) when the second locking member (28) is in the actuated position and the first locking member (24) is in the locked position.

3. The bean hopper assembly (12) of claim 1 or claim 2, wherein the knob (23) is rotationally fixed to a door (104) and the door (104) is rotatable with respect to the opening (20) between a closed position where the opening (20) is obstructed by the door (104) and an open position where the opening (20) is unobstructed by the door (104).

4. The bean hopper assembly (12) of claim 3, wherein the door (104) is located within an annular rim (102) and the annular rim (102) includes the first locking member (24), optionally wherein the knob (23) is rotatable to move the first locking member (24) to the unlocked position where the door (104) is located in the closed position and the knob (23) is rotatable to move the first locking member (24) to the locked position where the door (104) is located in the open position.

5. The bean hopper assembly (12) of claim 4, wherein the first locking member (24) includes at least one flange extending from the annular rim (102) and the housing (14) includes at least one cantilever (108), the at least one cantilever (108) being radially and circumferentially aligned with the at least one flange to axially retain the annular rim (102) in the locked position and being circumferentially spaced from the flange in the unlocked position, optionally wherein the at least one flange includes a plurality of flanges circumferentially spaced around the annular rim (102) and the at least one cantilever (108) includes a plurality of cantilevers circumferentially spaced equally to the plurality of flanges.

6. The bean hopper assembly (12) of any one of the previous claims, wherein the push button assembly (26) includes a first moveable bracket (58) and a second moveable bracket (60) pivotally connected to the first moveable bracket (58) by a linkage (62), optionally wherein the second moveable bracket (60) extends along an exterior of the housing (14).

7. The bean hopper assembly (12) of claim 6, wherein the first moveable bracket (58) extends along a first axis (A) and the second moveable bracket (60) extends along a second axis (B) transverse to the first axis (A), optionally wherein the linkage (62) is configured to translate movement of the first moveable bracket (58) along the first axis (A) into movement of the second moveable bracket (60) along the second axis (B).

8. The bean hopper assembly (12) of claim 7, wherein the housing (14) defines a slot (70) elongated along the second axis (B) and the tub (16) defines a channel (72) including a first portion (74) extending from a bottom surface (76) of the tub (16) and a second portion (78) opposite the bottom surface (76) of the tub (16), the first portion (74) of the channel (72) extending along the first axis (A) and the second portion (78) of the channel (72) extending along the second axis (B), optionally wherein the second moveable bracket (60) defines the second locking member (28), the second locking member (28) including a protrusion retained in the second portion (78) of the channel (72) and being moveable into alignment with the first portion (74) of the channel (72) when the push button assembly (26) is in the actuated position.

9. The bean hopper assembly (12) of any one of claims 6 to 8, further comprising a first spring element (82) and a second spring element (84), wherein the first spring element (82) is configured to bias the first moveable bracket (58) away from the actuated position and the second spring element (84) is configured to bias the second moveable bracket (60) away from the actuated position, optionally wherein the bean hopper assembly (12) further comprises a third spring element (94) and wherein the tub (16) defines a post (90) and the housing (14) defines an aperture (92), the post (90) being located in the aperture (92) and being configured to be biased away from the aperture (92) by the third spring element (94) to push the tub (16) away from the housing (14) when the knob (23) is in the unlocked position and the push button assembly (26) is in the actuated position.

10. The bean hopper assembly (12) of any one of the previous claims, wherein the push button assembly (26) is configured to lift, when actuated, the tub (16) from the housing (14) to facilitate removal of the tub (16) from the bean hopper assembly (12).

11. The bean hopper assembly (12) of any one of the previous claims, wherein the housing (14) defines a cantilever (108), wherein the tub (16) is at least partially located over the cantilever (108), wherein the first locking member (24) includes an annular rim (102) defining a flange extending circumferentially outwardly from the annular rim (102), wherein the knob (23) is rotationally fixed to the first locking member (24), wherein the flange is radially and circumferentially aligned with the cantilever (108) in a locked position and is circumferentially spaced from the cantilever (108) in an unlocked position and wherein the second locking member (28) is selectively moveable to an actuated position when the flange is in the unlocked position to release the tub (16), optionally wherein the tub (16) is fixed to the housing (14) when the push button assembly (26) is in the actuated position and the flange is in the locked position.

12. The bean hopper assembly (12) of any one of the previous claims, wherein the push button assembly (26) includes a first moveable bracket (58) extending along a first axis (A) and a second moveable bracket (60) extending along a second axis (B) pivotally connected to the first moveable bracket (58) by a linkage (62) configured to translate movement of the first moveable bracket (58) along the first axis (A) into movement of the second moveable bracket (60) along the second axis (B) and wherein the second locking member (28) is coupled to the second moveable bracket (60) and defines at least one protrusion selectively moveable to an actuated position when the first locking member (24) is in the unlocked position to release the tub (16), optionally wherein the tub (16) is fixed to the housing (14) when the at least one protrusion is in the actuated position and the first locking member (24) is in the locked position.

13. A brewing assembly (10), in particular a coffee maker or an espresso maker, the brewing assembly (10) comprising:
a user interface (38) including in particular a digital screen;
a grinder (22); and
a bean hopper assembly (12) according to any one of the previous claims, wherein the opening (20) is configured for routing beans into the grinder (22).

14. The brewing assembly (10) of claim 13, wherein the user interface (38) is configured, when the first locking member (24) is in the unlocked position and/or when the door (104) is in the closed position, to notify a user to rotate the knob (23) to enable a drink menu to be displayed or to actuate the push button assembly (26) to remove the tub (14) from the brewing assembly (10).

15. The brewing assembly (10) of claim 13 or 14, further comprising internal fluid and bean lines, the brewing assembly (10) being configured to operate a purging cycle allowing a cleaning of the internal fluid and bean lines, wherein the user interface (38) is configured, when the first locking member (24) is in the unlocked position and/or when the door (104) is in the closed position, to permit a user to run the purging cycle.

## Patentansprüche

1. Bohnenbehälter- bzw. -trichteranordnung (12), umfassend:
ein Gehäuse (14);
eine Wanne (16), die sich zumindest teilweise in dem Gehäuse (14) befindet und ein Fach (18) definiert, das konfiguriert ist, Bohnen aufzunehmen, eine Öffnung (20), die sich durch die Wanne (16) erstreckt und zum Leiten von Bohnen, insbesondere zum Leiten von Bohnen in ein Mahlwerk (22) konfiguriert ist;
einen Knopf (23), der sich durch die Öffnung (20) erstreckt und ein erstes Verriegelungsglied (24) beinhaltet, das konfiguriert ist, zwischen einer verriegelten Position, in der die Wanne (16) an dem Gehäuse (14) befestigt ist, und einer entriegelten Position, in der die Wanne (16) selektiv an dem Gehäuse (14) befestigt ist, umgeschaltet zu werden; und
eine Drucktastenanordnung (26), die ein zweites Verriegelungsglied (28) beinhaltet, das konfiguriert ist, selektiv in eine betätigte Position bewegt zu werden, wenn das erste Verriegelungsglied (24) in der entriegelten Position ist, um die Wanne (16) freizugeben.

2. Bohnenbehälteranordnung (12) nach Anspruch 1, wobei die Wanne (16) an dem Gehäuse (14) befestigt ist, wenn das zweite Verriegelungsglied (28) in der betätigten Position ist und das erste Verriegelungsglied (24) in der verriegelten Position ist.

3. Bohnenbehälteranordnung (12) nach Anspruch 1 oder Anspruch 2, wobei der Knopf (23) an einer Tür (104) drehbar befestigt bzw. drehfest mit dieser verbunden ist und die Tür (104) in Bezug auf die Öffnung (20) zwischen einer geschlossenen Position, in der die Öffnung (20) durch die Tür (104) versperrt ist, und einer offenen Position, in der die Öffnung (20) nicht durch die Tür (104) versperrt ist, drehbar ist.

4. Bohnenbehälteranordnung (12) nach Anspruch 3, wobei sich die Tür (104) innerhalb eines ringförmigen Rands (102) befindet und der ringförmige Rand (102) das erste Verriegelungsglied (24) beinhaltet, optional wobei der Knopf (23) drehbar ist, um das erste Verriegelungsglied (24) in die entriegelte Position zu bewegen, in der sich die Tür (104) in der geschlossenen Position befindet, und der Knopf (23) drehbar ist, um das erste Verriegelungsglied (24) in die verriegelte Position zu bewegen, in der sich die Tür (104) in der offenen Position befindet.

5. Bohnenbehälteranordnung (12) nach Anspruch 4, wobei das erste Verriegelungsglied (24) mindestens einen Flansch beinhaltet, der sich von dem ringförmigen Rand (102) erstreckt, und das Gehäuse (14) mindestens einen Ausleger (108) beinhaltet, wobei der mindestens eine Ausleger (108) radial und in Umfangsrichtung mit dem mindestens einen Flansch ausgerichtet ist, um den ringförmigen Rand (102) in der verriegelten Position axial zu halten, und von dem Flansch in der entriegelten Position in Umfangsrichtung beabstandet ist, optional wobei der mindestens eine Flansch eine Mehrzahl von Flanschen beinhaltet, die in Umfangsrichtung um den ringförmigen Rand (102) herum beabstandet sind, und der mindestens eine Ausleger (108) eine Mehrzahl von Auslegern beinhaltet, die in Umfangsrichtung gleichmäßig zu der Mehrzahl von Flanschen beabstandet sind.

6. Bohnenbehälteranordnung (12) nach einem der vorhergehenden Ansprüche, wobei die Drucktastenanordnung (26) eine/n erste/n bewegbare/n Halterung bzw. Träger (58) und eine/n zweite/n bewegbare/n Halterung bzw. Träger (60) beinhaltet, die bzw. der durch eine Verbindung bzw. ein Gestänge (62) schwenkbar mit der ersten bewegbaren Halterung (58) verbunden ist, optional wobei sich die zweite bewegbare Halterung (60) entlang einer Außenseite des Gehäuses (14) erstreckt.

7. Bohnenbehälteranordnung (12) nach Anspruch 6, wobei sich die erste bewegbare Halterung (58) entlang einer ersten Achse (A) erstreckt und sich die zweite bewegbare Halterung (60) entlang einer zweiten Achse (B) quer zu der ersten Achse (A) erstreckt, optional wobei das Gestänge (62) konfiguriert ist, eine Bewegung der ersten bewegbaren Halterung (58) entlang der ersten Achse (A) in eine Bewegung der zweiten bewegbaren Halterung (60) entlang der zweiten Achse (B) umzusetzen.

8. Bohnenbehälteranordnung (12) nach Anspruch 7, wobei das Gehäuse (14) einen Schlitz (70) definiert, der entlang der zweiten Achse (B) länglich ist, und die Wanne (16) einen Kanal (72) definiert, der einen ersten Abschnitt (74), der sich von einer Bodenfläche bzw. -oberfläche (76) der Wanne (16) erstreckt, und einen zweiten Abschnitt (78) gegenüber bzw. entgegengesetzt zu der Bodenfläche (76) der Wanne (16) beinhaltet, wobei sich der erste Abschnitt (74) des Kanals (72) entlang der ersten Achse (A) erstreckt und sich der zweite Abschnitt (78) des Kanals (72) entlang der zweiten Achse (B) erstreckt, optional wobei die zweite bewegbare Halterung (60) das zweite Verriegelungsglied (28) definiert, wobei das zweite Verriegelungsglied (28) einen Vorsprung beinhaltet, der in dem zweiten Abschnitt (78) des Kanals (72) gehalten ist und in Ausrichtung mit dem ersten Abschnitt (74) des Kanals (72) bewegbar ist, wenn die Drucktastenanordnung (26) in der betätigten Position ist.

9. Bohnenbehälteranordnung (12) nach einem der Ansprüche 6 bis 8, ferner umfassend ein erstes Federelement (82) und ein zweites Federelement (84), wobei das erste Federelement (82) konfiguriert ist, die erste bewegbare Halterung (58) von der betätigten Position weg vorzuspannen, und das zweite Federelement (84) konfiguriert ist, die zweite bewegbare Halterung (60) von der betätigten Position weg vorzuspannen, optional wobei die Bohnenbehälteranordnung (12) ferner ein drittes Federelement (94) umfasst und wobei die Wanne (16) einen Pfosten bzw. Zapfen (90) definiert und das Gehäuse (14) eine Öffnung (92) definiert, wobei sich der Zapfen (90) in der Öffnung (92) befindet und konfiguriert ist, durch das dritte Federelement (94) von der Öffnung (92) weg vorgespannt zu werden, um die Wanne (16) von dem Gehäuse (14) weg zu drücken, wenn der Knopf (23) in der entriegelten Position ist und die Drucktastenanordnung (26) in der betätigten Position ist.

10. Bohnenbehälteranordnung (12) nach einem der vorhergehenden Ansprüche, wobei die Drucktastenanordnung (26) konfiguriert ist, bei Betätigung die Wanne (16) von dem Gehäuse (14) anzuheben, um ein Entfernen der Wanne (16) aus der Bohnenbehälteranordnung (12) zu erleichtern.

11. Bohnenbehälteranordnung (12) nach einem der vorhergehenden Ansprüche, wobei das Gehäuse (14) einen Ausleger (108) definiert, wobei sich die Wanne (16) zumindest teilweise über dem Ausleger (108) befindet, wobei das erste Verriegelungsglied (24) einen ringförmigen Rand (102) beinhaltet, der einen Flansch definiert, der sich von dem ringförmigen Rand (102) in Umfangsrichtung nach außen erstreckt, wobei der Knopf (23) an dem ersten Verriegelungsglied (24) drehbar befestigt bzw. drehfest mit diesem verbunden ist, wobei der Flansch in einer verriegelten Position radial und in Umfangsrichtung mit dem Ausleger (108) ausgerichtet ist und in einer entriegelten Position in Umfangsrichtung von dem Ausleger (108) beabstandet ist, und wobei das zweite Verriegelungsglied (28) selektiv in eine betätigte Position bewegbar ist, wenn der Flansch in der entriegelten Position ist, um die Wanne (16) freizugeben, optional wobei die Wanne (16) an dem Gehäuse (14) befestigt ist, wenn die Drucktastenanordnung (26) in der betätigten Position ist und der Flansch in der verriegelten Position ist.

12. Bohnenbehälteranordnung (12) nach einem der vorhergehenden Ansprüche, wobei die Drucktastenanordnung (26) eine/n erste/n bewegbare/n Halterung bzw. Träger (58), die bzw. der sich entlang einer ersten Achse (A) erstreckt, und eine/n zweite/n bewegbare/n Halterung bzw. Träger (60) beinhaltet, der sich entlang einer zweiten Achse (B) erstreckt und schwenkbar mit der ersten bewegbaren Halterung (58) durch eine Verbindung bzw. ein Gestänge (62) verbunden ist, das konfiguriert ist, eine Bewegung der ersten bewegbaren Halterung (58) entlang der ersten Achse (A) in eine Bewegung der zweiten bewegbaren Halterung (60) entlang der zweiten Achse (B) umzusetzen, und wobei das zweite Verriegelungsglied (28) mit der zweiten bewegbaren Halterung (60) gekoppelt ist und mindestens einen Vorsprung definiert, der selektiv in eine betätigte Position bewegbar ist, wenn das erste Verriegelungsglied (24) in der entriegelten Position ist, um die Wanne (16) freizugeben, optional wobei die Wanne (16) an dem Gehäuse (14) befestigt ist, wenn der mindestens eine Vorsprung in der betätigten Position ist und das erste Verriegelungsglied (24) in der verriegelten Position ist.

13. Brühanordnung bzw. -gruppe (10), insbesondere eine Kaffeemaschine oder eine Espressomaschine, wobei die Brühanordnung (10) umfasst:
eine Benutzerschnittstelle (38), die insbesondere einen digitalen Bildschirm beinhaltet;
ein Mahlwerk (22); und
eine Bohnenbehälteranordnung (12) nach einem der vorhergehenden Ansprüche, wobei die Öffnung (20) zum Leiten von Bohnen in das Mahlwerk (22) konfiguriert ist.

14. Brühanordnung (10) nach Anspruch 13, wobei die Benutzerschnittstelle (38) konfiguriert ist, wenn das erste Verriegelungsglied (24) in der entriegelten Position ist und/oder wenn die Tür (104) in der geschlossenen Position ist, einen Benutzer zu benachrichtigen, den Knopf (23) zu drehen, um ein Anzeigen eines Getränkemenüs zu ermöglichen, oder die Drucktastenanordnung (26) zu betätigen, um die Wanne (14) aus der Brühanordnung (10) zu entfernen.

15. Brühanordnung (10) nach Anspruch 13 oder 14, ferner umfassend interne Fluid- und Bohnenleitungen, wobei die Brühanordnung (10) konfiguriert ist, einen Spülzyklus zu betreiben, der eine Reinigung der internen Fluid- und Bohnenleitungen ermöglicht, wobei die Benutzerschnittstelle (38) konfiguriert ist, wenn das erste Verriegelungsglied (24) in der entriegelten Position ist und/oder wenn die Tür (104) in der geschlossenen Position ist, es einem Benutzer zu ermöglichen, den Spülzyklus ablaufen zu lassen.

## Revendications

1. Ensemble trémie à grains (12) comprenant :
un logement (14) ;
une cuve (16) au moins partiellement localisée dans le logement (14) définissant une poche (18) configurée pour contenir des grains, une ouverture (20) s'étendant à travers la cuve (16) et configurée pour acheminer des grains, en particulier pour acheminer des grains dans un moulin (22) ;
un bouton de réglage (23) s'étendant à travers l'ouverture (20) et incluant un premier élément de verrouillage (24) configuré pour basculer entre une position verrouillée où la cuve (16) est fixée au logement (14) et une position déverrouillée où la cuve (16) est sélectivement fixée au logement (14) ; et
un ensemble bouton de poussée (26) incluant un second élément de verrouillage (28) configuré pour être sélectivement déplacé vers une position actionnée lorsque le premier élément de verrouillage (24) se trouve dans la position déverrouillée pour libérer la cuve (16).

2. Ensemble trémie à grains (12) selon la revendication 1, dans lequel la cuve (16) est fixée au logement (14) lorsque le second élément de verrouillage (28) se trouve dans la position actionnée et que le premier élément de verrouillage (24) se trouve dans la position verrouillée.

3. Ensemble trémie à grains (12) selon la revendication 1 ou la revendication 2, dans lequel le bouton de réglage (23) est fixé de manière à pouvoir tourner à une porte (104) et la porte (104) peut tourner par rapport à l'ouverture (20) entre une position fermée où l'ouverture (20) est obstruée par la porte (104) et une position ouverte où l'ouverture (20) n'est pas obstruée par la porte (104).

4. Ensemble trémie à grains (12) selon la revendication 3, dans lequel la porte (104) est localisée à l'intérieur d'un rebord annulaire (102) et le rebord annulaire (102) inclut le premier élément de verrouillage (24), éventuellement dans lequel le bouton de réglage (23) peut tourner pour déplacer le premier élément de verrouillage (24) vers la position déverrouillée où la porte (104) est localisée dans la position fermée et le bouton de réglage (23) peut tourner pour déplacer le premier élément de verrouillage (24) vers la position verrouillée où la porte (104) est localisée dans la position ouverte.

5. Ensemble trémie à grains (12) selon la revendication 4, dans lequel le premier élément de verrouillage (24) inclut au moins une collerette s'étendant depuis le rebord annulaire (102) et le logement (14) inclut au moins une poutre en porte-à-faux (108), la au moins une poutre en porte-à-faux (108) étant alignée de manière radiale et dans la circonférence avec la au moins une collerette pour retenir axialement le rebord annulaire (102) dans la position verrouillée et étant espacée dans la circonférence de la collerette dans la position déverrouillée, éventuellement dans lequel la au moins une collerette inclut une pluralité de collerettes espacées dans la circonférence autour du rebord annulaire (102) et la au moins une poutre en porte-à-faux (108) inclut une pluralité de poutres en porte-à-faux espacées dans la circonférence de manière égale vis-à-vis de la pluralité de collerettes.

6. Ensemble trémie à grains (12) selon l'une quelconque des revendications précédentes, dans lequel l'ensemble bouton de poussée (26) inclut un premier étrier mobile (58) et un second étrier mobile (60) raccordé de manière à pouvoir pivoter au premier étrier mobile (58) par une liaison (62), éventuellement dans lequel le second étrier mobile (60) s'étend le long d'un extérieur du logement (14).

7. Ensemble trémie à grains (12) selon la revendication 6, dans lequel le premier étrier mobile (58) s'étend le long d'un premier axe (A) et le second étrier mobile (60) s'étend le long d'un second axe (B) transversal au premier axe (A), éventuellement dans lequel la liaison (62) est configurée pour traduire un mouvement du premier étrier mobile (58) le long du premier axe (A) en un mouvement du second étrier mobile (60) le long du second axe (B).

8. Ensemble trémie à grains (12) selon la revendication 7, dans lequel le logement (14) définit une fente (70) allongée le long du second axe (B) et la cuve (16) définit un canal (72) incluant une première portion (74) s'étendant depuis une surface inférieure (76) de la cuve (16) et une seconde portion (78) opposée à la surface inférieure (76) de la cuve (16), la première portion (74) du canal (72) s'étendant le long du premier axe (A) et la seconde portion (78) du canal (72) s'étendant le long du second axe (B), éventuellement dans lequel le second étrier mobile (60) définit le second élément de verrouillage (28), le second élément de verrouillage (28) incluant une protubérance retenue dans la seconde portion (78) du canal (72) et étant mobile en alignement avec la première portion (74) du canal (72) lorsque l'ensemble bouton de poussée (26) se trouve dans la position actionnée.

9. Ensemble trémie à grains (12) selon l'une quelconque des revendications 6 à 8, comprenant en outre un premier élément ressort (82) et un second élément ressort (84), dans lequel le premier élément ressort (82) est configuré pour solliciter le premier étrier mobile (58) à l'opposé de la position actionnée et le second élément ressort (84) est configuré pour solliciter le second étrier mobile (60) à l'opposé de la position actionnée, éventuellement dans lequel l'ensemble trémie à grains (12) comprend en outre un troisième élément ressort (94) et dans lequel la cuve (16) définit un montant (90) et le logement (14) définit une ouverture (92), le montant (90) étant localisé dans l'ouverture (92) et étant configuré pour être sollicité à l'opposé de l'ouverture (92) par le troisième élément ressort (94) pour pousser la cuve (16) à l'opposé du logement (14) lorsque le bouton de réglage (23) se trouve dans la position déverrouillée et que l'ensemble bouton de poussée (26) se trouve dans la position actionnée.

10. Ensemble trémie à grains (12) selon l'une quelconque des revendications précédentes, dans lequel l'ensemble bouton de poussée (26) est configuré pour soulever, lorsqu'il est actionné, la cuve (16) du logement (14) pour faciliter un retrait de la cuve (16) de l'ensemble trémie à grains (12).

11. Ensemble trémie à grains (12) selon l'une quelconque des revendications précédentes, dans lequel le logement (14) définit une poutre en porte-à-faux (108), dans lequel la cuve (16) est au moins partiellement localisée sur la poutre en porte-à-faux (108), dans lequel le premier élément de verrouillage (24) inclut un rebord annulaire (102) définissant une collerette s'étendant dans la circonférence vers l'extérieur depuis le rebord annulaire (102), dans lequel le bouton de réglage (23) est fixé de manière à pouvoir tourner au premier élément de verrouillage (24), dans lequel la collerette est alignée de manière radiale et dans la circonférence avec la poutre en porte-à-faux (108) dans une position verrouillée et est espacée dans la circonférence de la poutre en porte-à-faux (108) dans une position déverrouillée et dans lequel le second élément de verrouillage (28) est sélectivement mobile vers une position actionnée lorsque la collerette se trouve dans la position déverrouillée pour libérer la cuve (16), éventuellement dans lequel la cuve (16) est fixée au logement (14) lorsque l'ensemble bouton de poussée (26) se trouve dans la position actionnée et que la collerette se trouve dans la position verrouillée.

12. Ensemble trémie à grains (12) selon l'une quelconque des revendications précédentes, dans lequel l'ensemble bouton de poussée (26) inclut un premier étrier mobile (58) s'étendant le long d'un premier axe (A) et un second étrier mobile (60) s'étendant le long d'un second axe (B) raccordé de manière à pouvoir pivoter au premier étrier mobile (58) par une liaison (62) configurée pour traduire un mouvement du premier étrier mobile (58) le long du premier axe (A) en un mouvement du second étrier mobile (60) le long du second axe (B) et dans lequel le second élément de verrouillage (28) est accouplé au second étrier mobile (60) et définit au moins une protubérance sélectivement mobile vers une position actionnée lorsque le premier élément de verrouillage (24) se trouve dans la position déverrouillée pour libérer la cuve (16), éventuellement dans lequel la cuve (16) est fixée au logement (14) lorsque la au moins une protubérance se trouve dans la position actionnée et que le premier élément de verrouillage (24) se trouve dans la position verrouillée.

13. Ensemble de brassage (10), en particulier un dispositif de fabrication de café ou un dispositif de fabrication d'expresso, l'ensemble de brassage (10) comprenant :
une interface utilisateur (38) incluant en particulier un écran numérique ;
un moulin (22) ; et
un ensemble trémie à grains (12) selon l'une quelconque des revendications précédentes, dans lequel l'ouverture (20) est configurée pour acheminer des grains dans le moulin (22).

14. Ensemble de brassage (10) selon la revendication 13, dans lequel l'interface utilisateur (38) est configurée, lorsque le premier élément de verrouillage (24) se trouve dans la position déverrouillée et/ou lorsque la porte (104) se trouve dans la position fermée, pour notifier à un utilisateur de tourner le bouton de réglage (23) pour permettre d'afficher un menu de boissons ou pour actionner le ensemble bouton de poussée (26) pour retirer la cuve (14) de l'ensemble de brassage (10).

15. Ensemble de brassage (10) selon la revendication 13 ou 14, comprenant en outre des conduites internes de fluide et de grains, l'ensemble de brassage (10) étant configuré pour faire fonctionner un cycle de purge permettant un nettoyage des conduites internes de fluide et de grains, dans lequel l'interface utilisateur (38) est configurée, lorsque le premier élément de verrouillage (24) se trouve dans la position déverrouillée et/ou lorsque la porte (104) se trouve dans la position fermée, pour permettre à un utilisateur d'exécuter le cycle de purge.
